# EUROPÄISCHE PATENTSCHRIFT

(11) **EP 1 486 642 B1**
(45) Veröffentlichungstag und Bekanntmachung des Hinweises auf die Patenterteilung: **19.03.2008**
(21) Anmeldenummer: 04008184.6
(22) Anmeldetag: 05.04.2004
(51) Int. Cl.: E21C 35/22, B01D 53/56, B01D 47/06

(54) **Entstauber mit Mehrstrahldüsen**
Dust remover with multi-jet nozzles
Dépoussiéreur avec becs à jets multiples

(30) Priorität: 13.06.2003 DE 10326601; 17.03.2004 DE 102004012967
(43) Veröffentlichungstag der Anmeldung: 15.12.2004
(73) Patentinhaber: CFT GMBH COMPACT FILTER TECHNIC, 45964 Gladbeck (DE)
(72) Erfinder: Both, Reinhold, Dipl.-Ing., 45889 Gelsenkirchen (DE)
(74) Vertreter: Schulte, Jörg

(56) Entgegenhaltungen:
- DE-A- 2 150 014
- DE-A- 2 224 767
- DE-C- 3 244 722
- US-A- 4 225 188
- US-A- 4 289 509
- US-A- 5 219 208

## Beschreibung

Die Erfindung betrifft einen Entstauber für den Einsatz hinter oder an Staub erzeugenden Maschinen und/oder Anlagen im untertägigen Berg- und Tunnelbau, mit einem Entstaubergehäuse, das als Abscheideelement einen mit Befeuchtungsdüsen versehenen Demister und einen Tropfenfänger aufweist und dem ein im Bereich Eingangsseite / Ausgangsseite im Reingasstrom hinter dem Demister angeordneter Lüfter mit Antrieb zugeordnet ist.

Ein solcher Entstauber ist aus der DE 198 53 190 A1 bekannt. Dieser bekannte Entstauber verfügt über einen Lüfter, der zwischen Eingangs- und Ausgangsseite, also im Rohgasstrom angeordnet ist, d.h. vor dem Demister und dem Tropfenfänger. Nicht nur den Demister, der annähernd waagerecht im Luftstrom hängend angeordnet ist, sind Befeuchtungsdüsen zu- bzw. vorgeordnet, sondern auch dem Lüfterrad, das somit nicht nur durch den Staub, sondern auch durch Wassertropfen belastet ist. Weitere Befeuchtungsdüsen sind im Bereich des Getriebes angeordnet, sodass ein insgesamt schon vorbefeuchteter Staub in den Bereich des Demisters gelangt. Die dort angeordneten Düsen sprühen in Richtung auf den Demister, um ein Abscheiden des Schlammes im Demister zu begünstigen. Abgesehen von den zahlreichen vorgeordneten Befeuchtungs- bzw. Wasserdüsen ist von Nachteil, dass kein einheitlicher Wassernebel vorgegeben ist, der zu einer Befeuchtung des von dem Rohgas mit transportierten Staubes führt. Weiter ist von Nachteil, dass durch die beschriebene Anordnung kein kompakter Aufbau des Entstaubers möglich ist, sondern nur eine lang gestreckte Ausführung. Die US-PS 4,289,509 beschreibt einen Entstauber, der einer Streckenvortriebsmaschine zugeordnet ist und bei dem die Befeuchtungsdüse oder die -düsen in Richtung Demister sprühen, hinter dem - also im Reingasstrom - der Lüfter angeordnet ist. Ein einheitlicher Wassernebel aus feinsten Tröpfchen, die die gesamte Demisterfläche abdecken, ist nicht vorgesehen und möglich. Die US-PS 5,219,208 beschreibt Wasserdüsen, die in einen Kanal hineinsprühen, ohne dass eine besondere Form für die Düsen oder den Wassernebel vorgesehen ist. Der Walzenschrämmlader nach der DE 22 24 767-A ist mit einem Venturiwäscher ausgerüstet. Der Axiallüfter ist im Rohgasstrom angeordnet. Nach der DE 32 44 722-C1 ist das Entstaubergehäuse und das Lüftergehäuse über eine knickbare Lutte miteinander verbunden. Auch hier ist der Lüfter somit im Reingasstrom angeordnet.

Der Erfindung liegt daher die Aufgabe zugrunde, einen auch bei stoßweise starker Staubbelastung optimal wirksamen, aus feinsten Wassertröpfchen bestehenden Wassernebel erzeugenden Entstauber zu schaffen.

Die Aufgabe wird gemäß der Erfindung dadurch gelöst, dass die dem Demister mit nachgeordnetem Tropfenfänger in Luftstromrichtung vorgeordneten Befeuchtungsdüsen als Mehrstrahldüse ausgebildet sind, die ein Kompaktgehäuse aufweist, das mit einem Verteilraum ausgerüstet ist, an den die ineinander sprühenden, verteilt angeordneten Einzeldüsen angeschlossen sind und die ein gemeinsames Spritzbild ergebend verteilt und gegen die Rohluft austragend angeordnet sind.

Bei einem derart ausgebildeten Entstauber ist es überraschend möglich, dass gesamte Entstaubergehäuse sehr kompakt auszuführen, wobei der Lüfter bzw. das Lüftergehäuse wie an sich bekannt "ausgelagert" wird. Durch die intensive Befeuchtung des Staubes durch die gegen die Rohluft austragenden Mehrstrahldüsen, bedarf es keiner vorgeordneten Anordnung von Wassernebel erzeugenden Düsen und der Lüfter kann somit hinter dem Demister und dem Tropfenfänger angeordnet werden, weil er für die gleichmäßige Befeuchtung des Rohgases bzw. der Rohluft nicht mehr benötigt wird. Da mehrere Mehrstrahldüsen vorgesehen sind, die jeweils ein gemeinsames Spritzbild ergeben, kann ein Schirm von Feinstwassernebel vorgegeben werden, durch den Staubpartikel nur entsprechend befeuchtet hindurchgelangen können. Sie werden dann sicher im Demister aufgefangen und abgeführt, während noch verbleibende Wassertröpfchen im Tropfenfänger aufgefangen und ebenfalls entsorgt werden. In den Bereich des Lüfters und insbesondere des Lüfterrades gelangt somit nur diesen nicht mehr gefährdende Reinluft. Aufgrund der Reduzierung der Baumaße kann ein derartiger Entstauber vielseitiger eingesetzt werden. Ganz davon abgesehen, dass er aufgrund der besonderen Ausbildung wesentlich effektiver arbeitet und in den Gestehungskosten günstiger liegt. Der dichte Wassernebel wird dadurch erreicht, dass die Mehrstrahldüsen gegen die Rohluft austragend angeordnet sind, also einen sehr intensiven und dichten Wassernebel feinster Tröpfchen erzeugen, sodass eine schnelle und sichere Anlagerung an den heranströmenden Staub bewirkt wird. Der Staub kann dann im Demister aufgefangen und wie beschrieben entsorgt werden. Alle Einzeldüsen werden somit mit dem gleichen Druck beaufschlagt, weil sie von einem und dem gleichen Verteilraum aus mit Druckwasser beaufschlagt sind an den die ineinander sprühenden, verteilt angeordneten Einzeldüsen angeschlossen sind. Die Einzeldüsen sind ineinander sprühend angeordnet, um ein gleichmäßiges Sprühbild zu erzeugen, dass für eine gleichmäßige Benetzung des Staubes wichtig ist. Sie sind in einem bestimmten Abstand zueinander angeordnet und zwar so, dass sie das gleichmäßige Spritzbild vorgeben, wobei aufgrund des gleichen Druckes und der gleichen Abmessungen dafür Sorge getragen ist, dass sie sich nicht gegenseitig beeinflussen und behindern, sondern das gleichmäßige Spritzbild ergeben bzw. vorgeben.

Den gleichmäßigen und dichten Nebel über die Zugangsfläche des Demisters gesehen erreicht man gemäß der Erfindung dadurch, dass die Mehrstrahldüsen einem mit der Neigung des Demisters korrespondierend schräg gestellten Traggerüst zugeordnet sind. Die Mehrstrahldüsen sprühen somit ihren Wassernebel in die Rohluft hinein, wobei durch die beschriebene Anordnung eine gleichmäßige Dicke des Wassernebels für die Gesamtfläche des Demisters sichergestellt ist, also unabhängig davon, ob die Rohluft an der oberen Decke des Entstaubergehäuses entlangstreift, in der Mitte oder im Bodenbereich.

Soll ein bestimmter vergrößerter Spritzwinkel erzeugt werden, ist es von Vorteil, wenn zur Vergrößerung des Spritzwinkels einige der Einzeldüsen im Bereich einer Schrägen der Düsengrundfläche austretend angeordnet sind, während eine oder mehrere dieser Einzeldüsen einer Ebene der Düsengrundfläche zugeordnet bleiben. Dadurch kann gezielt ein größerer Spritzwinkel erzeugt werden, der dennoch die notwendige Intensität bzw. das notwendige Spritzbild sicherstellt.

Mit den Mehrstrahldüsen soll ein gleichmäßiges und den Staub sicher niederschlagendes Spritzbild vorgegeben werden, wobei gemäß der Erfindung die Mehrstrahldüsen mit kleinerem Spritzwinkel (z.B. 60°) und mit größerem Spritzwinkel (z.B. 120°) am Traggerüst ein Vollkreisspritzbild ergebend angeordnet sind. Denkbar ist es beispielsweise, dass am äußeren Rand die Mehrstrahldüsen mit kleinerem Spritzwinkel und mittig eine oder mehrere mit größerem Spritzwinkel am Traggerüst angebracht sind, umso eine möglichst intensive Befeuchtung bzw. Beeinflussung des von der Rohluft mitgetragenen Staubes sichergestellt wird.

Um den Zustand des Demisters und Tropfenfängers leicht und schnell überwachen zu können, gleichzeitig auch einen Austausch durchzuführen oder aber andere Arbeiten in diesem Bereich vornehmen zu können, ist vorgesehen, dass im Bereich des Demisters und des Tropfenabscheiders Inspektionstüren am Entstaubergehäuse, vorzugsweise Drehtüren, vorgesehen sind. Durch die Verwendung von Drehtüren ist sichergestellt, dass diese Bauteile auch sofort wieder zur Verfügung stehen, wenn die Inspektionsarbeiten abgeschlossen sind und dass sie auch genau so sitzen, wie dies für ihre Wirksamkeit zweckmäßig ist. Die Inspektionstüren müssen mit Dichtungen versehen sein, die bei entsprechender Bauweise immer ihren richtigen Sitz erhalten und für das Abdichten Sorge tragen.

Eine gleichmäßige Belastung des Demisters und des Tropfenfängers mit Staub bzw. mit der feuchten Luft erreicht man gemäß der Erfindung dadurch, dass zwischen Demister und Tropfenfänger Luftleitbleche angeordnet sind und das Bodenblech in Richtung Tropfenfänger geneigt positioniert ist. Das Wasserstaubgemisch bzw. der Schlamm wird über das geneigte Bodenblech in Richtung Tropfenfänger geführt, um mit dem Abwasser abgeführt zu werden oder aber auch getrennt, je nachdem wie es zweckmäßig ist. Der Schlamm wird dann in einen Absetzer geleitet oder aber auf andere Art und Weise entsorgt, sodass Demister und Tropfenfänger immer durch die entsprechenden Luftströme gleichmäßig erreichbar sind.

Nach einer weiteren zweckmäßigen Ausbildung der Erfindung ist vorgesehen, dass der Lüfter einem an das Entstaubergehäuse ankoppelbaren Lüftergehäuse zugeordnet und mit einem Lärmschutz ausgerüstet ist. Aufgrund der besonderen Ausbildung des Entstaubers ist es nun möglich, dem Lüfter ein eigenes Gehäuse und damit auch einen entsprechenden Lärmschutz zuzuordnen. Dies bedeutet, dass das Lüftergehäuse als solches einen Lärmschutz erhält, sodass auch die Lärmbelastung eines derartigen Entstaubers wesentlich reduziert ist. Dem in das Entstaubergehäuse integrierten Lüfter alter Bauart konnte ein entsprechender Lärmschutz schon aufgrund der Baumaße nicht zugeordnet werden. Gerade den immer schärfer werdenden Umweltschutzbestimmungen genügt ein erfindungsgemäßer Entstauber damit optimal.

Bei der beschriebenen Positionierung von Entstauber und Lüftergehäuse wird die Reinluft über dem Förderer ausgetragen. Um hier das Entstehen neuen Staubes zu verhindern, sieht die Erfindung vor, dass die Ausgangsseite des Entstaubergehäuses bzw. des Lüftergehäuses eine Lenkungsdüse aufweist. Diese Lenkungsdüse sorgt dafür, dass die Reinluft so abgeleitet wird, dass sie nicht auf das Fördergut einwirken kann. Diese Lenkungsdüse ist einstellbar, sodass je nach Bedarf die Austragsrichtung der Reinluft verändert werden kann.

Die Erfindung zeichnet sich insbesondere dadurch aus, dass aufgrund eines sicher erzeugten feinste Tröpfchen aufweisende Vollkreisspritzbildes vor dem Demister die Möglichkeit gegeben ist, das gesamte Entstaubergehäuse sehr kompakt auszubilden und den Lüfter auszulagern, einmal um ihn selbst zu schützen und zum anderen um ihn mit Schalldämpfern ausrüsten zu können, um so den Auflagen der Umweltschützer zusätzlich zu genügen. Die Einzeldüsen der Mehrstrahldüsen sind so angeordnet und verteilt, dass sich vor dem Demister ein sehr intensiver Feinstwassernebel ergibt, der die Verwendung weiterer Wasserdüsen vor dem Demister erübrigt. Das befeuchtete Staub- bzw. Schlammmaterial wird im Demister niedergeschlagen und entsorgt, während noch verbleibende Tröpfchen in der Reinluft dann im Tropfenfänger aufgefangen werden, um auf dem Luftstrom heraus ebenfalls einer Entsorgung zugeführt zu werden. Insgesamt gesehen kann aufgrund dieser besonderen Ausbildung des Entstaubers dieser direkt den Staub erzeugenden Maschinen, beispielsweise einer Vortriebsmaschine zugeordnet werden, um hier gezielt und am richtigen Ort seine Aufgabe zu erfüllen, nämlich den Staub aus den Wettern bzw. aus der Luft herauszunehmen, um ihn niederzuschlagen und damit den Auflagen der Bergbehörde oder anderer Behörden zu genügen. Neben der Niederschlagung des Staubes kann mit dem gleichen und nur ergänzten Entstauber auch auf die Sprengschwaden eingegangen werden, die im untertägigen Berg- und Tunnelbau insbesondere beim Vortreiben von Strecken nun einmal immer anfallen. Nach wie vor wird sowohl beim Auffahren von Gesteinsstrecken wie auch beim Auffahren von Flözstrecken auf die Sprengarbeit nicht verzichtet bzw. es kann nicht darauf verzichtet werden, weil beispielsweise zu kleine Streckenquerschnitte vorhanden sind. Besonders vorteilhaft ist bei einem derartigen Entstauber bzw. auch bei entsprechenden Verfahren, dass auf eine gesonderte Einrichtung verzichtet werden kann und dass der hier benötigte Zusatzaufwand relativ gering ist, der Erfolg aber erheblich. Erstmals ist es möglich, nicht nur den Staub mit einer derartigen Einrichtung niederzuschlagen und unschädlich zu machen, sondern auch die Sprengschwaden und zwar jeweils im Wechsel.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: eine schematisiert wiedergegebene Vortriebsmaschine mit Entstauber,
- Figur 2: eine Seitenansicht eines Entstaubers mit getrenntem Lüftergehäuse,
- Figur 3: eine Draufsicht auf den Entstauber nach Figur 2,
- Figur 4: eine weitere Ausführung eines Entstaubers mit getrenntem Lüftergehäuse in Seitenansicht und
- Figur 5: die Ausführung des Entstaubers nach Figur 4 in Draufsicht,
- Figur 6: ein Traggerüst mit einer Vielzahl von Mehrstrahldüsen,
- Figur 7: einen Schnitt durch eine Mehrstrahldüse mit Schräge,
- Figur 8: eine Mehrstrahldüse, teilweise im Schnitt mit ebener Anordnung der Einzeldüsen.

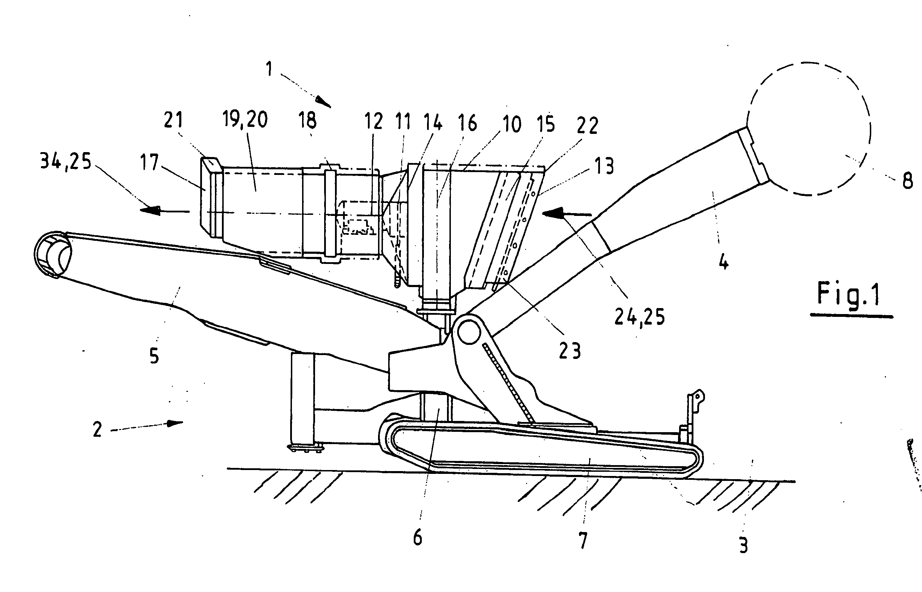

Figur 1 zeigt in Seitenansicht eine Vortriebsmaschine 2 mit integriertem Entstauber 1. Durch die Vortriebsmaschine 2 ist in der nur angedeuteten Strecke 3 eines untertägigen Vortriebes angeordnet und verfügt über den Gewinnungsarm 4 mit Gewinnungswalze 8 und dem nachgeordneten Förderer 5. Der Entstauber 1 ist der Vortriebsmaschine 2 unmittelbar zugeordnet und mit dem Laufwerk 7 über eine Stütze 6 verbunden. Es stützt sich also so am Laufwerk 7 ab, dass die Position des Gewinnungsarmes 4 und des Förderers 5 seinen Standpunkt nicht beeinflussen.

Erkennbar ist in Figur 1, dass der Lüfter 11 mit seinem Antrieb 12 hier nicht mehr zwischen Eingangsseite 13 und Ausgangsseite 14 des Entstaubergehäuses angeordnet ist, sondern vielmehr jenseits des Demisters 15 und Tröpfchenfängers 16 in einem eigenen Lüftergehäuse 18. Das Lüftergehäuse 18 verfügt über einen Lärmschutz 19 in Forme eines Schalldämpfers 20, sodass die austretende Reinluft im Bereich des Ausgangs 17 des Lüftergehäuses 18 eine nur noch geringe Geräuscheentwicklung aufweist.

Am Ausgang 17 des Lüftergehäuses 18 ist eine Lenkungsdüse 21 angeordnet, die dafür sorgt, dass die austretende Reinluft keine Belastung für die nachgeordneten Betriebe darstellt. Die Lenkungsdüse 21 kann nach Belieben eingestellt werden, um die Reinluft in Richtung First oder anderer Bereiche der Strecke zu leiten.

Erkennbar ist in Figur 1 auch, dass das Entstaubergehäuse 10 im Bereich des Demisters 15 eine besondere Form aufweist, da die Oberkante 22 die Unterkante 23 erheblich überragt. Gebirgsbrocken oder zu grober Staub können somit nicht in den Bereich des Demisters 15 gelangen.

Die Rohluft ist mit 24 und der Reingasstrom mit 34 bezeichnet. Beide geben gleichzeitig auch die Luftstromrichtung 25 an.

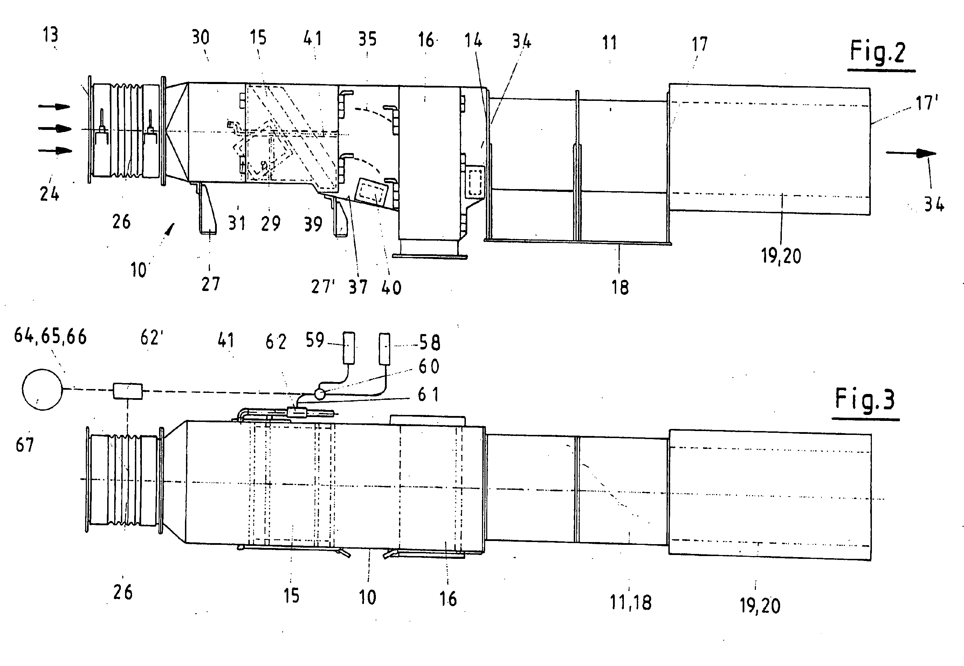

Figur 2 zeigt eine Draufsicht auf einen Entstauber 1, wobei auch hier die Rohluft mit 24 bezeichnet ist, die vom Luttenanschluss 26 her in das Entstaubergehäuse 10 einströmt. In diesem Bereich erfolgt dann der erste Kontakt mit dem Wassernebel, der über die Befeuchtungsdüsen 29, 30, 31 in Form der Mehrstrahldüse 33 erzeugt wird. Diese Mehrstrahldüsen 33 tragen in die Rohluft aus, sorgen also für eine intensive Durchfeuchtung des mitgeführten Staubes bzw. des Kontaktierens von Wasser und Staub. Im Demister 15 erfolgt dann die Abscheidung des Staubes, während die noch Wassertröpfchen mitführende Luft dann über die Luftleitbleche 35, 36 gleichmäßig auf den Tropfenfänger 16 verteilt wird. Erkennbar ist, dass das Bodenblech 37 so geneigt ist, dass der Schlamm entweder abgeführt und mit in den Bereich des Tropfenfängers 16 gelangt oder aber beispielsweise durch einen Inspektionstür 40 hier entnommen werden kann. Das gesamte Entstaubergehäuse 10 stützt sich über Stützen 27 auf den Boden ab, wobei hier ggf. auch das nachgeführte Lüftergehäuse 18 mit abgestützt wird oder über eigene Stützen verfügt.

Die erwähnten Mehrstrahldüsen 33 sind an einem Traggerüst 38 zugeordnet, um einen vom Abstand her gleichen Wassernebel für den nachgeordneten, schräg stehenden Demister 15 sicherzustellen. Mit 41 ist das Wasserzuleitungsrohr bezeichnet, dass diese einzelne Mehrstrahldüsen 33 gleichmäßig mit Druckwasser versorgt.

Im Bereich des Traggerüstes 38 ist eine weitere Inspektionstür 39 angeordnet, wobei erkennbar ist, dass all diese Inspektionstüren 39, 40 als Schwenktüren ausgerüstet sind, um immer die gleiche Schließposition zu gewährleisten.

Im Bereich der Ausgangsseite 14 ist an das Entstaubergehäuse 10 ein Lüftergehäuse 18 angeschlossen, in dem der Lüfter 18 mit seinem Lüfterrad tätig ist und dafür sorgt, dass die Rohluft 24 durch das Entstaubergehäuse 10 gesaugt wird. Der Lüfter 11 selbst wird jetzt nur noch durch Reinluft beaufschlagt, also den mit 34 bezeichneten Reingasstrom. Dieser verlässt das Lüftungsgehäuse 18 entweder am Ausgang 17 oder am Ausgang 17', nämlich dann, wenn dem eigentlichen Lüftergehäuse 18 ein Lärmschutz 19 in Form eines Schalldämpfers 20 nachgeordnet ist.

Figur 3 zeigt eine Draufsicht auf den Entstauber 1 mit dem Entstaubergehäuse 10 und dem nachgeordneten Lüftergehäuse 18 mit Schalldämpfer 20, der als Lärmschutz 19 dient. Dem eigentlichen Lüftergehäuse 18 vorgeordnet ist das Entstaubergehäuse 10, in dem sowohl der Demister 15 mit dem Tropfenfänger 16 angeordnet wie auch die Befeuchtungsdüsen 29, 30, 31. Diese Befeuchtungsdüsen 29, 30, 31 werden über das Wasserzuleitungsrohr 41 beschickt, das normalerweise mit dem normalen Wasserversorgungsnetz verbunden ist. In diesem Wasserzuleitungsrohr 41 ist ein Mischer 62 angeordnet und zwar so, dass er die über den Beipass femgeführte Flüssigkeit aus den Additivbehältern 58, 59 mit dem im Wasserzuleitungsrohr 41 strömenden Wasser intensiv vermischt. Die richtige Menge an Additiven wird über den Dosierer 60 zugemischt, sodass im Falle des Ansaugens von Sprengschwaden ein Wasseradditivgemisch über die Befeuchtungsdüsen 29, 30, 31 auf die entsprechenden Sprengschwaden auftreffen, die dafür sorgen können, dass die von den Sprengschwaden mitgeführten nitrosen Gase so reagieren, dass sie ungefährlich werden. Es versteht sich, dass neben den Additivbehältern 58, 59 auch weitere Additivbehälter vorgesehen sein können, beispielsweise auch solche, die ein Additiv im Normalfall, d. h. beim Betrieb des Entstaubers 1 dem Wasser zuführen, um so das Niederschlagen des Staubes zu begünstigen. In der Regel wird aber der Mischer 62 nur dann eingeschaltet, wenn nach dem Sprengen entsprechende Sprengschwaden niederzuschlagen sind.

Bei besonders intensiven Sprengschwaden oder aus anderen Gründen kann es zweckmäßig sein, der beschriebenen Sprüheinrichtung und Beeinflussungseinrichtung für die Sprengschwaden eine Sprüheinrichtung 64 vorzuordnen. Diese Sprüheinrichtung 64 mit den Düsen 65, 66 ist hier nur angedeutet und zwar im Bereich des Luttenanschlusses 26. Der Abstand dieser Sprüheinrichtung 64 zu den Befeuchtungsdüsen 29, 30, 31 kann dem Bedarf entsprechend gewählt werden. Auch bei dieser Sprüheinrichtung 64 werden die notwendigen Additive über die Additivbehälter 58, 59 abgezogen und zwar über den Dosierer 60, um dann über den Mischer 62 für die intensive Vermischung Sorge zu tragen, insbesondere dann, wenn hier wie gezeigt aus dem Wasserversorger 67 vorgehaltenes Wasser zugemischt werden soll.

Denkbar ist es, die Sprüheinrichtung 64 und die normalen Befeuchtungsdüsen 29, 30, 31 gemeinsam einzusetzen oder aber nur die entsprechend verbesserten und erweiterten Befeuchtungsdüsen 29, 30, 31 oder nur die Sprüheinrichtung 64. Damit ist eine optimale Vielseitigkeit gegeben.

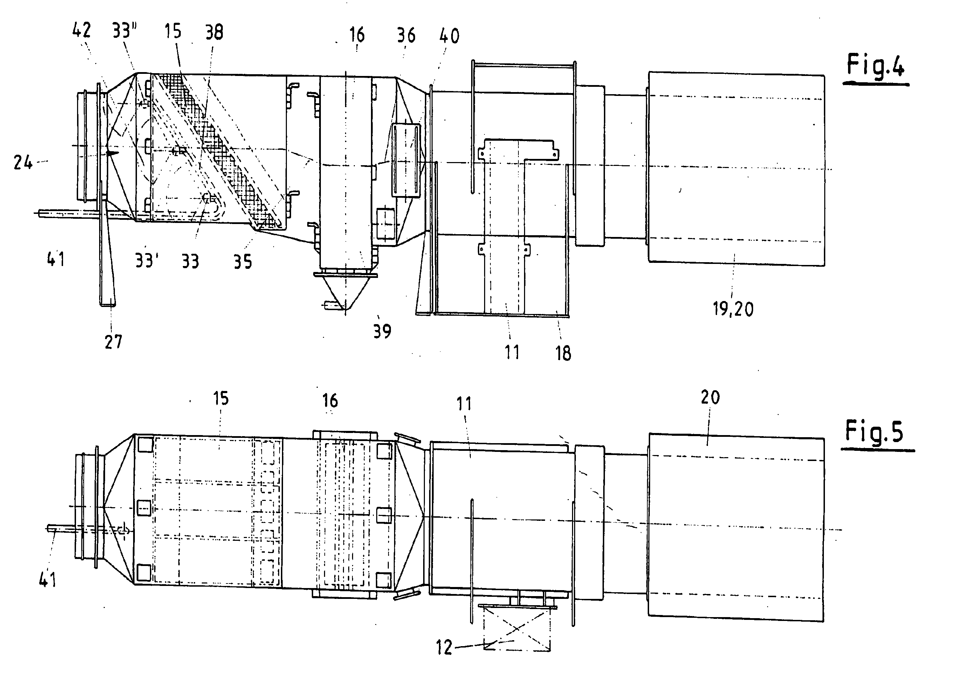

Die Figuren 4 und 5 zeigen eine weitere Ausbildungsmöglichkeit des Entstaubers 1, bestehend aus dem Entstaubergehäuse 10 und dem Lüftergehäuse 18. Auch hier wird auf der Eingangsseite 13 des Entstaubergehäuses 10 der Demister 15 schräg stehend angeordnet und mit dem Rohgas bzw. der Rohluft 24 beaufschlagt, wobei diese Rohluft 24 vor Erreichen des Demisters 15 den Wassernebel 42, der von den Mehrstrahldüsen 33, 33', 33" erzeugt wird, durchdringen muss, bevor er in den Demister 15 gelangt. Der Staub wird dabei so intensiv befeuchtet, dass er im Demister 15 sicher niedergeschlagen und entsorgt wird. Auch hier sind entsprechende Inspektionstüren 39 vorgesehen, über die die Einzelteile des Entstaubergehäuses 10 erreichbar sind. Dem Entstaubergehäuse 10 nachgeordnet ist das Lüftergehäuse 18 mit dem Lüfter 11 und dem Antrieb 12. Auch hier ist dem Lüftergehäuse 18 bzw. dem Lüfter 11 ein Schalldämpfer 20 nachgeordnet, um die Lärmbelastung entsprechend deutlich zu reduzieren.

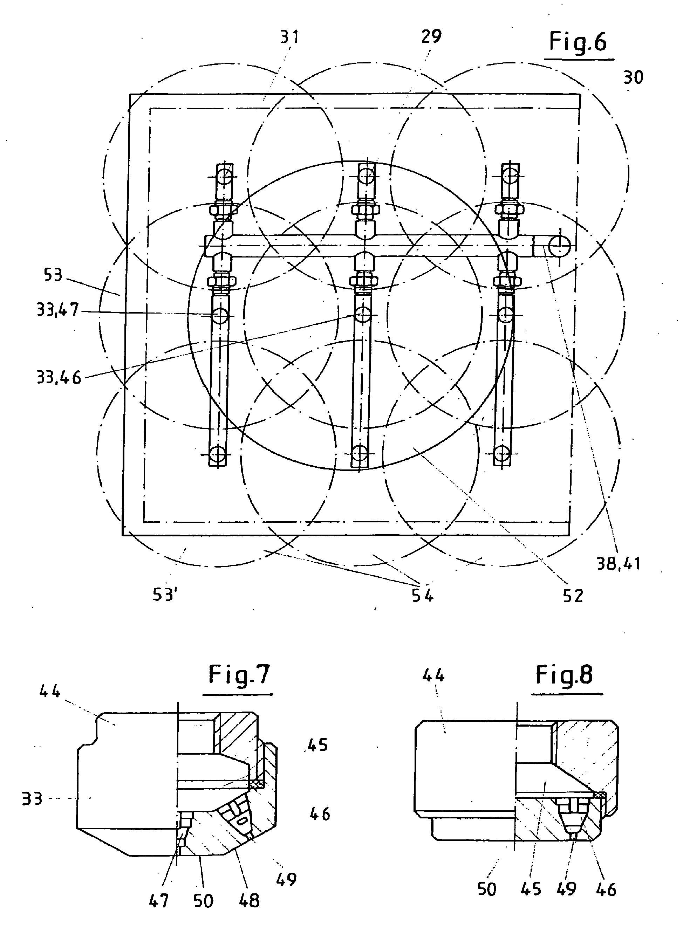

Figur 6 gibt ein Vollkreisspritzbild 54 wieder, dass von den einzelnen Spritzbildern 52, 53 der Mehrstrahldüsen 33 erzeugt wird. Erkennbar ist, dass die Spritzbilder 52 bzw. 53, 53' nicht gleich groß sind. Dies liegt daran, dass die einzelnen Mehrstrahldüsen 33 unterschiedlich ausgeführt sind, wie die Figuren 7 und 8 verdeutlichen. Die einzelnen Mehrstrahldüsen 33 sind dabei, wie erkennbar, einem Traggerüst 38 zugeordnet, dass von den Wasserleitungsrohren 41 gebildet ist. Dadurch ist die Möglichkeit gegeben, die einzelnen Mehrstrahldüsen 3 optimal mit Druckwasser zu versorgen und gezielt so anzuordnen, dass sich das erkennbare Gesamtspritzbild bzw. das Vollkreisspritzbild 54 ergibt.

Die einzelnen Mehrstrahldüsen 33 weisen ein Kompaktgehäuse 44 mit einem Verteilraum 45 auf, über den die Einzeldüsen 46, 47 gleichmäßig mit Druckwasser versorgt werden können. Nach Figur 8 sind die Einzeldüsen 46 beispielsweise kreisförmig angeordnet, sodass ihre Austrittsbohrungen 49 in der gleichen Höhe der Düsengrundfläche 50 angeordnet sind. Nach Figur 7 ist eine Schräge 48 vorgesehen, aus der ein Teil der Einzeldüse 46 austrägt, während andere Einzeldüsen 47, wie bei der Ausführung nach Figur 8, innerhalb der Düsengrundfläche 50 austragen. Durch die Ausführung nach Figur 7 ergibt sich ein entsprechend größeres Spritzbild 52, weil die Einzeldüsen 47 unter einem anderen Winkel austragen und auch in einer anderen Höhe. Trotz alledem ergibt sich das aus Figur 6 ersichtliche Vollkreisspritzbild 54 optimaler Gleichmäßigkeit und Intensität.

## Patentansprüche

1. Entstauber für den Einsatz hinter oder an Staub erzeugenden Maschinen und/oder Anlagen im untertägigen Berg- und Tunnelbau, mit einem Entstaubergehäuse (10), das als Abscheideelement einen mit Befeuchtungsdüsen (29, 30, 31) versehenen Demister (15) und einen Tropfenfänger (16) aufweist und dem ein im Bereich Eingangsseite (13) / Ausgangsseite (14) im Reingasstrom (34) hinter dem Demister (15) angeordneter Lüfter (11) mit Antrieb (12) zugeordnet ist,
**dadurch gekennzeichnet,**
**dass** die dem Demister (15) mit nachgeordnetem Tropfenfänger (16) in Luftstromrichtung (25) vorgeordneten Befeuchtungsdüsen (29, 30, 31) als Mehrstrahldüse (33) ausgebildet sind, die ein Kompaktgehäuse (44) aufweist, das mit einem Verteilraum (45) ausgerüstet ist, an den die ineinander sprühenden, verteilt angeordneten Einzeldüsen (46, 47) angeschlossen sind und die ein gemeinsames Spritzbild ergebend verteilt und gegen die Rohluft (24) austragend angeordnet sind.

2. Entstauber nach Anspruch 1,
**dadurch gekennzeichnet,**
**dass** die Mehrstrahldüsen (33) einem mit der Neigung des Demisters (15) korrespondierend schräg gestellten Traggerüst (38) zugeordnet sind.

3. Entstauber nach einem der vorhergehenden Ansprüche,
**dadurch gekennzeichnet,**
**dass** die Einzeldüsen (46, 47) einer Mehrstrahldüse (33) den gleichen Durchmesser und gleiche Austrittsbohrungen aufweisen.

4. Entstauber nach einem der vorhergehenden Ansprüche,
**dadurch gekennzeichnet,**
**dass** zur Vergrößerung des Spritzwinkels einige der Einzeldüsen (46, 47) im Bereich einer Schrägen (48) der Düsengrundfläche (50) austretend angeordnet sind.

5. Entstauber nach einem der vorhergehenden Ansprüche,
**dadurch gekennzeichnet,**
**dass** die Mehrstrahldüsen (33) mit kleinerem Spritzwinkel (z. B. 60°) und mit größerem Spritzwinkel (z. B. 120°) am Traggerüst (38) ein Vollkreisspritzbild (54) ergebend angeordnet sind.

6. Entstauber nach einem der vorhergehenden Ansprüche,
**dadurch gekennzeichnet,**
**dass** im Bereich des Demisters (15) und des Tropfenabscheiders (16) Inspektionstüren (39, 40) am Entstaubergehäuse (10), vorzugsweise Drehtüren, vorgesehen sind.

7. Entstauber nach Anspruch 1,
**dadurch gekennzeichnet,**
**dass** zwischen Demister (15) und Tropfenfänger (16) Luftleitbleche (35, 36) angeordnet sind und das Bodenblech (37) in Richtung Tropfenfänger (16) geneigt positioniert ist.

8. Entstauber nach Anspruch 1,
**dadurch gekennzeichnet,**
**dass** der Lüfter (11) einem an das Entstaubergehäuse (10) ankoppelbaren Lüftergehäuse (18) zugeordnet und mit einem Lärmschutz (19) ausgerüstet ist.

9. Entstauber nach einem der vorhergehenden Ansprüche,
**dadurch gekennzeichnet,**
**dass** die Ausgangsseite (14) des Entstaubergehäuses (10) bzw. des Lüftergehäuses (18) eine Lenkungsdüse (21) aufweist.

## Claims

1. Dust extractor for use behind or on dust-producing machines and/or installations in underground mining and tunnelling, comprising a dust extractor housing (10) which has as separating element a demister (15) provided with moistening nozzles (29, 30, 31) and a droplet collector (16) and to which there is assigned a fan (11) with drive (12) which is arranged in the region of the inlet side (13) / outlet side (14) in the clean gas stream (34) behind the demister (15), **characterized in that** the moistening nozzles (29, 30, 31) arranged upstream of the demister (15) with downstream droplet collector (16) in the air flow direction (25) are designed as a multi-jet nozzle (33) which has a compact housing (44) equipped with a distribution chamber (45) to which there are connected the individual nozzles (46, 47) which are arranged in a distributed manner and spray into one another, and which are distributed so as to produce a joint spray pattern and are arranged so as discharge towards the uncleaned air (24).

2. Dust extractor according to claim 1, **characterised in that** the multi-jet nozzles (33) are assigned to a support frame (38) which is arranged at an angle in a manner corresponding to the inclination of the demister (15).

3. Dust extractor according to one of the preceding claims, **characterised in that** the individual nozzles (46, 47) of a multi-jet nozzle (33) have the same diameter and the same outlet bores.

4. Dust extractor according to one of the preceding claims, **characterised in that**, in order to increase the injection angle, some of the individual nozzles (46, 47) are arranged so as to emerge in the region of a bevel (48) of the nozzle base surface (50).

5. Dust extractor according to one of the preceding claims, **characterised in that** the multi-jet nozzles (33) are arranged with a smaller injection angle (e.g. 60°) and with a larger injection angle (e.g. 120°) on the support frame (38) so as to produce a full-circle injection pattern (54).

6. Dust extractor according to one of the preceding claims, **characterised in that** inspection doors (39, 40), preferably revolving doors, are provided on the dust extractor housing (10) in the region of the demister (15) and the droplet separator (16).

7. Dust extractor according to claim 1, **characterised in that** air-guiding plates (35, 36) are arranged between the demister (15) and the droplet collector (16) and the bottom plate (37) is positioned in a manner inclined towards the droplet collector (16).

8. Dust extractor according to claim 1, **characterised in that** the fan (11) is assigned to a fan housing (18) which can be coupled to the dust extractor housing (10) and is equipped with a noise protection means (19).

9. Dust extractor according to one of the preceding claims, **characterised in that** the outlet side (14) of the dust extractor housing (10) and/or of the fan housing (18) has a deflection nozzle (21).

## Revendications

1. Dépoussiéreur destiné à être utilisé derrière ou sur des machines et/ou installations produisant de la poussière dans l'exploitation minière ou la construction de tunnels souterrains, comprenant un carter de dépoussiéreur (10) qui présente en tant qu'élément de séparation un séparateur de brouillard (15) pourvu de buses d'humidification (29, 30, 31) et un collecteur de gouttes (16), et auquel est affecté un ventilateur (11) avec entraînement (12) qui est disposé dans la zone côté entrée (13) / côté sortie (14) derrière le séparateur de brouillard (15) dans le courant de gaz purifié (34), **caractérisé en ce que** les buses d'humidification (29, 30, 31) disposées dans le sens du courant d'air (25) en amont du séparateur de brouillard (15) avec collecteur de gouttes (16) monté en aval sont conçues comme buses multi-jet (33) qui présentent un carter compact (44) qui est équipé d'une chambre de répartition (45) à laquelle sont raccordées les buses individuelles (46, 47) disposées de manière répartie, pulvérisant les unes dans les autres, et qui sont réparties de manière à ce qu'il en résulte une forme de jet commune et à décharger contre l'air brut (24).

2. Dépoussiéreur selon la revendication 1, **caractérisé en ce que** les buses multi-jet (33) sont affectées à un cadre porteur (38) incliné de manière correspondante à l'inclinaison du séparateur de brouillard (15).

3. Dépoussiéreur selon l'une quelconque des revendications précédentes, **caractérisé en ce que** les buses individuelles (46, 47) d'une buse multi-jet (33) possèdent le même diamètre et les mêmes alésages de sortie.

4. Dépoussiéreur selon l'une quelconque des revendications précédentes, **caractérisé en ce que**, pour agrandir l'angle de pulvérisation, certaines des buses individuelles (46, 47) sont disposées de manière à déboucher au niveau d'un plan incliné (48) de la surface de base des buses (50).

5. Dépoussiéreur selon l'une quelconque des revendications précédentes, **caractérisé en ce que** les buses multi-jet (33) sont disposées avec un angle de pulvérisation plus petit (par exemple 60°) et avec un angle de pulvérisation plus grand (par exemple 120°) sur le cadre porteur (38) de manière à ce qu'il en résulte une forme de jet en cercle entier (54).

6. Dépoussiéreur selon l'une quelconque des revendications précédentes, **caractérisé en ce que** des portes de visite (39, 40), de préférence des portes pivotantes, sont prévues sur le carter de dépoussiéreur (10) au niveau du séparateur de brouillard (15) et du séparateur de gouttes (16).

7. Dépoussiéreur selon la revendication 1, **caractérisé en ce que** des tôles de guidage d'air (35, 36) sont disposées entre le séparateur de brouillard (15) et le collecteur de gouttes (16) et la tôle de fond (37) est inclinée en direction du collecteur de gouttes (16).

8. Dépoussiéreur selon la revendication 1, **caractérisé en ce que** le ventilateur (11) est affecté à un carter de ventilateur (18) pouvant être accouplé au carter de dépoussiéreur (10) et équipé d'un dispositif d'insonorisation (19).

9. Dépoussiéreur selon l'une quelconque des revendications précédentes, **caractérisé en ce que** le côté sortie (14) du carter de dépoussiéreur (10) ou du carter de ventilateur (18) présente une buse de guidage (21).
